# EUROPÄISCHE PATENTSCHRIFT

(11) **EP 0 745 799 B1**
(45) Veröffentlichungstag und Bekanntmachung des Hinweises auf die Patenterteilung: **03.02.1999**
(21) Anmeldenummer: 96108531.3
(22) Anmeldetag: 29.05.1996
(51) Int. Cl.: F16K 35/10, F16K 35/14

(54) **Handventil**
Manual valve
Valve manuelle

(30) Priorität: 29.05.1995 DE 19519626
(43) Veröffentlichungstag der Anmeldung: 04.12.1996
(73) Patentinhaber: SIEMENS AKTIENGESELLSCHAFT, 80333 München (DE)
(72) Erfinder: Conrads, Hermann-Josef, Dipl.-Ing. (FH), 91074 Herzogenaurach (DE); Laurer, Erwin, Dipl.-Ing. (FH), 91096 Möhrendorf (DE); Model, Jürgen, Dipl.-Ing. (TH), 91056 Erlangen (DE); Horstmann, Wilfried, Dipl.-Ing. (FH), 91058 Erlangen (DE)

(56) Entgegenhaltungen:
- AU-B- 429 258
- DE-U- 9 107 429
- US-A- 1 975 178
- US-A- 4 781 044

## Beschreibung

Die Erfindung betrifft ein dem Anmelder vorbekanntes Handventil mit einem Ventilsitz und einem diesem gegenüber bewegbaren Ventilteller, der mit einer Ventilspindel von einem Handrad über eine Spindelmutter zu verstellen ist, die auf der Ventilspindel drehbeweglich angeordnet ist, während die Ventilspindel unverdrehbar, aber längsbeweglich gegenüber dem Ventilsitz und dem Handrad angeordnet ist.

Der Erfindung liegt die Aufgabe zugrunde, für das eingangs genannte Handventil eine robuste und zuverlässige Verriegelung zu schaffen, die eine individuelle Betätigungssperre ermöglicht, bei Bedarf aber auch zu einer gemeinsamen Festlegung mehrerer Handventile (einer Handventilkombination) ausgebildet werden kann.

Dabei ist eine wesentliche Voraussetzung, daß die Ventile nur verriegelt werden können, wenn sie sich in ihrer gewünschten Betriebslage befinden, z.B. ganz ZU oder AUF, also Ventilteller auf Ventilsitz oder gegen den Rücksitz gefahren, falls vorhanden.

Andernfalls soll eine Verriegelung nicht möglich sein. Hierdurch soll das ausführende Personal darauf aufmerksam gemacht werden, daß die Ventilstellung nicht mit der betriebsgemäßen übereinstimmt, in der das Ventil gegen Falschbetätigung zu verriegeln ist. Damit erhält das Personal dann die Möglichkeit, das "falsch" stehende Ventil in die betriebsmäßige Endlage zu bringen.

Aus der AU 45036 ist ein (nicht-oberbegriffsmäßiges) Ventil bekannt, das ein Haube umfaßt, die über das Ventil gestülpt werden kann und dort arretierbar ist, wenn das Ventil sich in der Schließstellung befindet.

Gemäß der Erfindung wird das eingangs genannte Handventil so ausgebildet, daß eine Verriegelungshaube mit einem beweglichen Sperrglied über das Handrad greift, das mit der Ventilspindel zusammenwirkt und nur in einer definierten Ventilstellung das Einbringen von Verriegelungsstiften in Öffnungen der Verriegelungshaube gestattet.

Bei der Erfindung wird die Längsbewegung der Ventilspindel zur Anzeige der richtigen Ventilstellung erfaßt. Dabei wird durch das Sperrglied auf die Verriegelungshaube selbst eingewirkt, die das Handrad in der Verriegelungsstellung abdeckt. Nur in der gewünschten Betriebsstellung ist das Einbringen der Verriegelungsstifte möglich, mit denen die Verriegelungshaube am Handrad festgelegt wird.

Im Prinzip kann der Kontakt zwischen dem Sperrglied und der Ventilspindel durch die Schwerkraft vermittelt werden. Es ist jedoch im Hinblick auf unterschiedliche Einbaulagen günstiger, wenn das Sperrglied von einer Feder in Richtung Ventilspindel gedrückt wird.

Eine vorteilhafte Ausführungsform der Erfindung besteht darin, daß das Sperrglied auf bewegliche Teile der Verriegelungshaube wirkt und diese von einer Verriegelungsstellung in eine Sperrstellung bewegt, in der keine Verriegelung möglich ist. Nähere Einzelheiten dieser Ausbildung ergeben sich später aus der Beschreibung eines Ausführungsbeispiels.

Bei mehreren gemeinsam zu verriegelnden Ventilen kann ein Handventil nach der Erfindung als Teil einer Ventilkombination mit einem weiteren Handventil von einer gemeinsamen Verriegelungshaube überdeckt werden, die eine beiden Ventilen gemeinsame Wippe als Sperrglied enthält. Mit Wippe ist dabei ein federnd gelagertes Bauteil gemeint, das von den Ventilspindeln beider Ventile ausgelenkt werden kann.

Die Stellung der Wippe läßt sich besonders einfach dadurch erfassen, daß die Wippe einen Vorsprung hat, der nur in einer definierten Stellung beider Ventile in eine Ausnehmung der Verriegelungshaube bewegbar ist. Andernfalls wird das Aufsetzen der Verriegelungshaube auf die Handräder der Ventile gesperrt.

Eine Weiterbildung der Erfindung besteht darin, daß die Verriegelungshaube mit einem Meldeschalter oder mehreren Meldeschaltern zusammenwirkt. Mit diesem oder diesen kann die Ventilstellung weitergemeldet und bei Bedarf auch in elektrische Verriegelungen eingebracht werden.

Besonders eignet sich das Handventil mit Verriegelungshaube zur Verwendung an einem Druckhalter und dem Leitungssystem des Sekundärkreises eines Druckwasser-Reaktors, da es durch seine Einfachheit besticht, Fehlbedienungen praktisch ausschließt und den hohen Sicherheitsanforderungen in kerntechnischen Anlagen genügt.

Zur näheren Erläuterung der Erfindung werden anhand der beiliegenden Zeichnung Ausführungsbeispiele beschrieben. Es zeigt:
- FIG 1: ein schematisiert dargestelltes Handventil mit seiner Verriegelungshaube in verriegeltem Zustand in einem Vertikal-schnitt,
- FIG 2: das Handventil nach FIG 1 mit der Verriegelungshaube in der Sperrstellung,
- FIG 3: eine Ventilkonbination mit zwei Handventilen und einer gemeinsamen Verriegelungshaube in verriegeltem Zustand und
- FIG 4: die Ventilkombination nach FIG 3 mit der gesperrten Verriegelungshaube wegen falscher Ventilstellung.

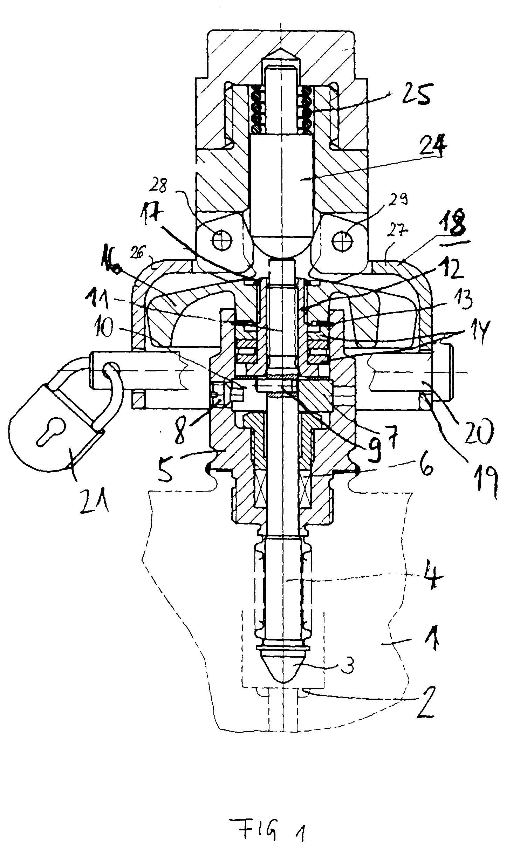

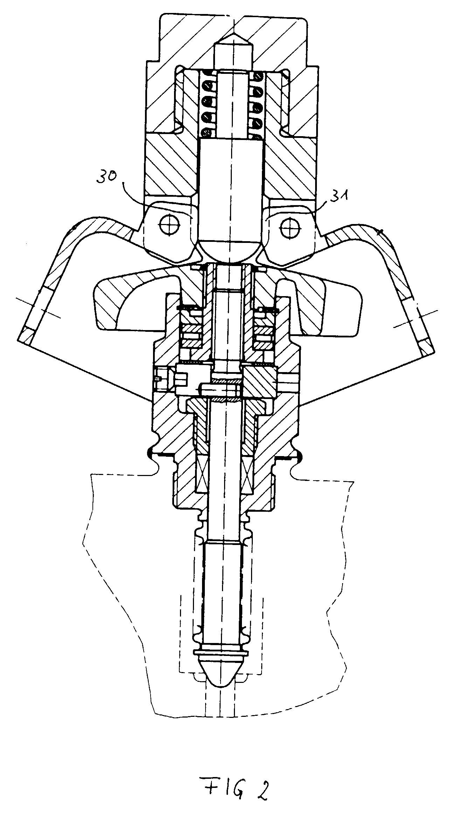

Das Handventil nach den FIG 1 und 2 besitzt ein gestrichelt gezeichnetes Ventilgehäuseunterteil 1 mit dem Ventilsitz 2, dem ein konischer Ventilteller 3 zugeordnet ist. Der Ventilteller 3 ist das untere Ende einer Ventilspindel 4, die im Oberteil 5 des Ventilgehäuses mit einer Stopfbuchse 6 abgedichtet ist.

Über der Stopfbuchse 6 ist eine Scheibe 7 mit einer Schraube 8 im Ventilgehäuse unverdrehbar festgelegt, in der die Ventilspindel 4 gelagert ist. Ein Stift 9 ragt aus der Ventilspindel 4 in eine Nut 10 der Scheibe 7, so daß die Ventilspindel 4 nur Längsbewegungen durch die Scheibe 7 ausführen kann.

Über der Scheibe 7 trägt die Ventilspindel 4 ein Gewinde 11, auf dem eine Spindelmutter 12 sitzt. Die Spindelmutter 12 ist durch einen Sprengring 13 über Zwischenlagen 14 im Oberteil 5 so festgelegt, daß sie keine Längsbewegungen ausfüren kann. Oberhalb des Sprengringes 13 ist ein Handrad 16 auf einen Vierkant der Spindelmutter 12 aufgesteckt und mit einem Sprengring 17 gesichert. Mit diesem Handrad 16 kann die Spindelmutter 12 gedreht und damit die Ventilspindel 4 in Längsrichtung verstellt werden.

Über das Handrad 16 greift in FIG 1 eine Verriegelungshaube 18, die an ihrem unteren Ende Öffnungen 19 zur Aufnahme von Verriegelungsstiften 20 hat. Die Verriegelungsstifte 20 greifen unter das Handrad 16 und können in dieser Lage mit einem Vorhängeschloß 21 gesichert werden.

An der Oberseite der Verriegelungshaube 18 ist als Sperrglied ein Stößel 24 angeordnet, der von einer Spiralfeder 25 nach unten gegen die Oberseite der Ventilspindel 4 gedrückt wird. Damit wird die Stellung der Ventilspindel 4 erfaßt.

In der in FIG 1 gezeichneten Stellung ist das Handventil geöffnet. Der Stößel 24 wird von der Ventilspindel 4 nach oben gedrückt, so daß die beiden Halbschalen 26 und 27 der Verriegelungshaube 18, die bei 28 und 29 gelenkig gelagert sind, ihre untere Stellung einnehmen können, in der das Handrad 16 mit der Verriegelungshaube 18 abgedeckt werden kann.

In FIG 2 ist das Handventil dagegen geschlossen. Die Ventilspindel 4 ist mit ihrer Oberseite in das Handrad 16 zurückgefahren. Der Stößel 24 wird von der Feder 25 nachgeschoben und drückt die Halbschalen 26, 27 über Nocken 30, 31 auseinander. In dieser Stellung ist das Einführen von Verriegelungsstiften 20 in die Öffnung 19 nicht möglich. Man sieht ferner, daß eine Kraft auf die Außenseite der Halbschalen 26, 27 nicht in der Lage ist, den Stößel 24 nach oben zu schieben.

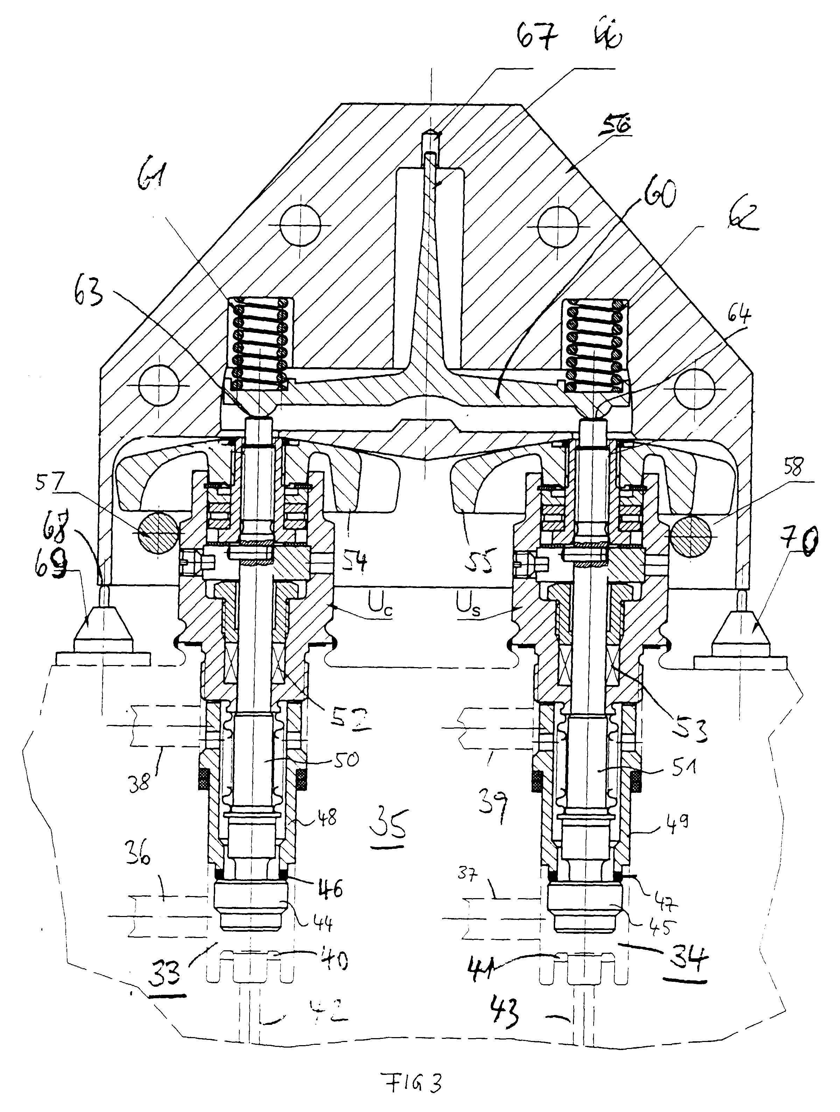

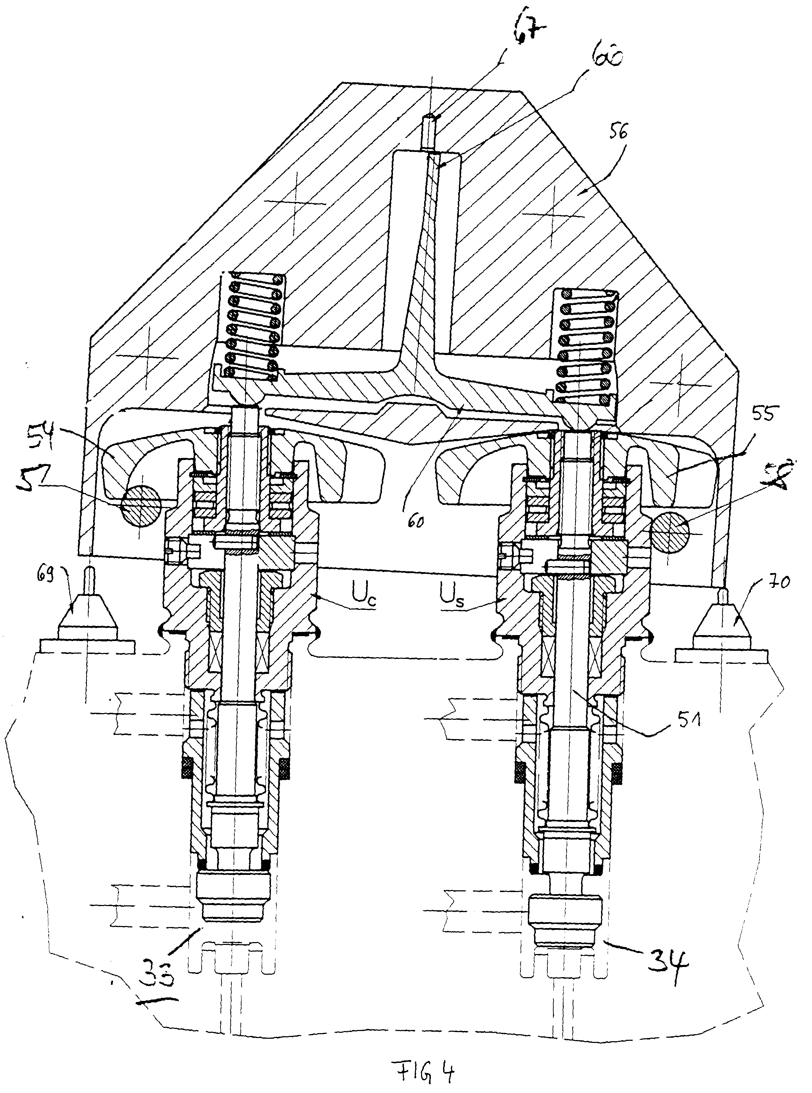

Die in den FIG 3 und 4 dargestellte Ventilkombination umfaßt jeweils zwei gleiche Handventile 33 und 34 mit einem gemeinsamen Ventilgehäuse 35, in dem, wie gestrichelt gezeichnet, zwei Zuflußkanäle 36, 37, zwei Abflußkanäle 38, 39 und Ventilsitze 40 und 41 mit Auslässen 42 und 43 untergebracht sind. Die zugehörigen Ventilteller 44 und 45 haben je einen flüssigkeitsdichten Rücksitz 46 und 47 an einem in das Ventilgehäuse 35 eingesetzten Rohrstück 48 und 49, das den unteren Teil der Ventilspindeln 50 und 51 umgibt.

Das mit Stopfbuchsen 52 und 53 abgedichtete obere Ende der Ventilspindeln 50, 51 trägt in bekannter Weise Handräder 54 und 55, über die eine gemeinsame Verriegelungshaube 56 greift. Durch diese können in der in FIG 3 gezeichneten Stellung, in der beide Ventile 33, 34 geöffnet sind, Verriegelungsstifte 57 und 58 gesteckt werden, die dann unter den Handrädern 54, 55 zu liegen kommen.

Die Verriegelungshaube 56 enthält eine Wippe 60, die in der Verriegelungshaube 56 unter der Wirkung von zwei Spiralfedern 61 und 62 fliegend gelagert ist und mit kugelförmigen Vorsprüngen 63 und 64 auf der Oberseite der Ventilspindeln 50, 51 aufsitzt.

Bei der in FIG 3 dargestellten Lage haben beide Handventile 33, 34 die gewünschte betriebsmäßige Öffnungsstellung. Deshalb steht die Wippe 60 in der Horizontalen, und ein Sperrglied 66 auf der den Ventilen 33,34 abgekehrten Oberseite der Wippe 60 ragt in eine Ausnehmung 67 in der Mitte der Verriegelungshaube 56. Diese kann ohne Behinderung in die gezeichnete Lage gebracht werden, in der sich die Verriegelungsstifte 57, 58 ohne weiteres in Bohrungen in der Verriegelungshaube 56 einführen lassen. Der untere Rand 68 der Verriegelungshaube 56 betätigt dabei die beiden Meldeschalter 69 und 70.

In FIG 4 ist dagegen gezeichnet, daß das rechte Handventil 34 unerwünscht geschlossen ist. Seine Ventilspindel 51 ist deshalb in das Handrad 55 eingefahren, so daß die Wippe 60 schief steht. Das Sperrglied 66 verfehlt die Ausnehmung 67, und die Verriegelungshaube 56 kann nicht richtig über die Handräder 54 und 55 gestülpt werden. Der linke Verriegelungsstift 57 paßt nicht unter das Handrad 54, so daß die fehlerhafte Betriebsstellung sofort ersichtlich wird. Außerdem wird der Meldeschalter 69 nicht gedrückt.

Zu erwähnen ist noch, daß durch eine entsprechende Anordnung der Ausnehmung 67 z.B. außermittig und/oder schräg das Prinzip der Wippe 60 mit dem Sperrglied 66 auch für eine gemeinsame Verriegelungshaube 56 an Ventilen verwendet werden kann, die unterschiedliche Endlagen haben sollen. Nötigenfalls sind dabei Vorkehrungen zu treffen, um Verwechslungen wechselseitig unterschiedlicher Endstellungen zu vermeiden.

## Patentansprüche

1. Handventil mit einem Ventilsitz (2) und einem diesem gegenüber bewegbaren Ventilteller (3), der mit einer Ventilspindel (4) von einem Handrad (16) über eine Spindelmutter (12) zu verstellen ist, die auf der Ventilspindel (4) drehbeweglich angeordnet ist, während die Ventilspindel (4) unverdrehbar, aber längsbeweglich gegenüber dem Ventilsitz (2) und dem Handrad (16) angeordnet ist, **dadurch gekennzeichnet,** daß eine Verriegelungshaube (18) mit einem beweglichen Sperrglied (24) über das Handrad (16) greift, wobei das Sperrglied mit der Ventilspindel (4) zusammenwirkt und nur in einer definierten Ventilstellung das Einbringen von Verriegelungsstiften (20) in Öffnungen (19) der Verriegelungshaube (18) gestattet.

2. Handventil nach Anspruch 1, **dadurch gekennzeichnet**, daß das Sperrglied (24) von einer Feder (25) in Richtung Ventilspindel (4) gedrückt wird.

3. Handventil nach Anspruch 1 oder 2, **dadurch gekennzeichnet,** daß das Sperrglied (24) auf bewegliche Teile (26, 27) der Verriegelungshaube (18) wirkt und diese von einer Verriegelungsstellung in eine Sperrstellung bewegt, in der keine Verriegelung möglich ist.

4. Handventil (33) nach Anspruch 1 oder 2, **dadurch gekennzeichnet**, daß die Verriegelungshaube (56) außer über das Handrad (54) auch über ein Handrad (55) eines weiteren Handventils (34) greift, und daß das bewegliche Sperrglied als Wippe (60) ausgebildet ist, die beiden Handventilen (33) und (34) zugeordnet ist.

5. Handventil nach Anspruch 4, **dadurch gekennzeichnet**, daß die Wippe (60) einen Vorsprung (66) hat, der nur in einer definierten Stellung beider Ventile (33, 34) als Sperrglied in eine Ausnehmung (67) der Verriegelungshaube (56) bewegbar ist.

6. Handventil nach einem der Ansprüche 1 bis 5, **dadurch gekennzeichnet,** daß die Verriegelungshaube (56) mit zumindest einem Meldeschalter (67, 70) zusammenwirkt.

7. Verwendung eines Handventils nach einem der vorhergehenden Ansprüche an einem Druckhalter und/oder dem Sekundärkreis eines Druckwasser-Reaktors.

## Claims

1. Manually actuated valve with a valve seat (2) and a valve disc (3) which is movable in relation to the valve seat (2), which valve disc (3) is to be adjusted with a valve spindle (4) by a handwheel (16) by way of a spindle nut (12) which is arranged in a rotatably movable manner on the valve spindle (4), whereas the valve spindle (4) is arranged so that it is not rotatable, but is longitudinally movable in relation to the valve seat (2) and the handwheel (16), characterized in that an interlocking cover (18) with a movable blocking element (24) reaches over the handwheel (16), with the blocking element cooperating with the valve spindle (4) and only allowing the introduction of interlocking pins (20) into openings (19) of the interlocking cover (18) in a defined valve position.

2. Manually actuated valve according to claim 1, characterized in that the blocking element (24) is pressed by a spring (25) in the direction of the valve spindle (4).

3. Manually actuated valve according to claim 1 or 2, characterized in that the blocking element (24) acts on movable parts (26, 27) of the interlocking cover (18) and moves the latter from an interlocking position into a blocking position in which no interlocking is possible.

4. Manually actuated valve (33) according to claim 1 or 2, characterized in that the interlocking cover (56), apart from reaching over the handwheel (54), also reaches over a handwheel (55) of another manually actuated valve (34), and in that the movable blocking element is constructed as a rocker (60) which is allocated to both manually actuated valves (33) and (34).

5. Manually actuated valve according to claim 4, characterized in that the rocker (60) has a projection (66) which is only movable as blocking element into a recess (67) of the interlocking cover (56) in a defined position of both valves (33, 34).

6. Manually actuated valve according to one of claims 1 to 5, characterized in that the interlocking cover (56) cooperates with at least one signalling switch (67 [sic], 70).

7. Use of a manually actuated valve according to one of the preceding claims on a pressurizer and/or the secondary circuit of a pressurized water reactor.

## Revendications

1. Valve manuelle équipée d'un siège (2) et d'un plateau mobile (3) par rapport à celui-ci, réglable au moyen d'une tige (4) par un volant (16) par un écrou à tige (12), disposé sur la tige (4) de manière à pouvoir tourner, tandis que la tige (4) est disposée de manière interdisant toute rotation mais lui permettant de se déplacer longitudinalement par rapport au siège (2) et au volant (16), caractérisée en ce qu'un capot de verrouillage (18) équipé d'un organe d'arrêt (24) mobile s'enclenche au moyen du volant (16), l'organe d'arrêt coopérant avec la tige (4) et ne permettant la mise en place de goujons de verrouillage (20) dans des ouvertures (19) du capot de verrouillage (18) que dans une position définie de la valve.

2. Valve manuelle selon la revendication 1, caractérisée en ce que l'organe d'arrêt (24) est comprimé par un ressort (25) en direction de la tige (4).

3. Valve manuelle selon la revendication 1 ou 2, caractérisée en ce que l'organe d'arrêt (24) agit sur des éléments mobiles (26, 27) du capot de verrouillage (18) et déplace ceux-ci d'une position de verrouillage vers une position de blocage dans laquelle aucun verrouillage n'est possible.

4. Valve manuelle (33) selon la revendication 1 ou 2, caractérisée en ce que le capot de verrouillage (56), outre au moyen du volant (54), s'enclenche également au moyen d'un volant (55) d'une valve manuelle (34) supplémentaire, et en ce que l'organe d'arrêt mobile est conçu comme bascule (60), affectée aux deux valves manuelles (33) et (34).

5. Valve manuelle selon la revendication 4, caractérisée en ce que la bascule (60) présente une saillie (66), déplaçable uniquement dans une position définie des deux valves (33, 34) comme organe d'arrêt dans un évidement (67) du capot de verrouillage (56).

6. Valve manuelle selon l'une des revendications 1 à 5, caractérisée en ce que le capot de verrouillage (56) coopère avec au moins un interrupteur de signalisation (67, 70).

7. Utilisation d'une valve manuelle selon l'une des revendications précédentes sur un manostat et/ou sur le circuit secondaire d'un réacteur à eau sous pression.
